# EUROPÄISCHE PATENTSCHRIFT

(11) **EP 4 255 954 B1**
(45) Veröffentlichungstag und Bekanntmachung des Hinweises auf die Patenterteilung: **07.01.2026**
(21) Anmeldenummer: 21816478.8
(22) Anmeldetag: 30.11.2021
(51) Int. Cl.: C08G 18/76, C08K 5/12, C08K 3/26, C08K 3/04, C08K 5/25, C08G 18/30, C09J 175/12, C08G 18/10, C08G 18/48, C08G 18/75, C09J 175/08

(54) **HITZEHÄRTBARE POLYURETHAN-ZUSAMMENSETZUNGEN**
THERMOSETTING POLYURETHANE COMPOSITIONS
COMPOSITIONS DE POLYURÉTHANE THERMODURCISSABLE

(30) Priorität: 04.12.2020 EP 20212027
(43) Veröffentlichungstag der Anmeldung: 11.10.2023
(73) Patentinhaber: Sika Technology AG, 6340 Baar (CH)
(72) Erfinder: SCHLUMPF, Michael, 8143 Stallikon (CH); REIMANN, Sven, 8046 Zürich (CH)
(74) Vertreter: Sika Patent Attorneys
(86) Internationale Anmeldenummer: PCT/EP2021/083607
(87) Internationale Veröffentlichungsnummer: WO 2022/117576

(56) Entgegenhaltungen:
- US-A- 5 231 147
- US-A1- 2005 202 946

## Beschreibung

### Technisches Gebiet

Die Erfindung betrifft die Verwendung einer Stickstoffverbindung als Härter für die Hitzehärtung in einer hitzehärtbaren Polyurethan-Zusammensetzung. Des Weiteren betrifft die Erfindung eine hitzehärtbare Polyurethan-Zusammensetzung sowie ein Verfahren zur Härtung einer solchen Zusammensetzung.

### Stand der Technik

Polyurethan-Zusammensetzungen sind seit langem bekannt und werden in vielen Bereichen eingesetzt, z.B. als Klebstoffe, Dichtstoffe oder Beschichtungen in der Bau- und Fertigungsindustrie. Es wird zwischen einkomponentigen (1K) und zweikomponentigen (2K) Polyurethan (PUR)-Zusammensetzungen unterschieden. Bei den 1K Polyurethan-Zusammensetzungen, bei denen alle Bestandteile in einer Komponente enthalten sind, kann man ferner unterscheiden zwischen feuchtigkeitshärtenden Zusammensetzungen, die unter Einfluss von Luftfeuchtigkeit aushärten, und hitzehärtenden Zusammensetzungen, bei denen die Aushärtung durch Erwärmung induziert wird.

Die WO 2009/080738 A1 (Sika Technology AG) beschreibt z.B. eine feuchtigkeitshärtende Polyurethanzusammensetzung, welche ein Polyisocyanat und ein mittels Aldehyd oder Keton blockiertes Amin als durch Feuchtigkeit aktivierbaren Vernetzer aufweist. Diese Zusammensetzungen härten mit Feuchtigkeit bei Raumtemperatur oder leicht erhöhter Temperatur, insbesondere unterhalb von 40 °C aus, wobei Aldehyde und/oder Ketone entstehen. Um ein unerwünschtes Ausgasen der Aldehyde und Ketone im ausgehärteten Zustand deutlich zu reduzieren, enthält die Zusammensetzung Hydrazide, welche mit den Aldehyden und/oder Ketonen bei Temperaturen über 80°C zu schwerflüchtigen Komponenten reagieren.

Hitzehärtende Polyurethan-Zusammensetzungen werden vornehmlich als Kleb- und Dichtstoffe in der industriellen Fertigung eingesetzt. Dies im Besonderen als Dichtstoffe im Fahrzeugbau, wobei die Aushärtung der hitzehärtenden Polyurethan-Zusammensetzungen beispielsweise nach der Lackierung der Bauteile zusammen mit der Lackhärtung in entsprechenden Aushärtungsöfen, typischerweise bei Temperaturen von > 110°C, erfolgt.

Bei hitzehärtenden Polyurethan-Zusammensetzungen werden thermolabile Härter bzw. durch Wärme aktivierbare Härter eingesetzt, welche bei einer definierten Temperatur den Härtungsvorgang der Zusammensetzung starten.

Die EP 0 255 572 A1 (Sika AG) beschreibt z.B. eine Einkomponenten-Klebstoff- und/oder Dichtstoffmasse, die ein Prepolymer auf Basis von Polyurethan und einen mit Wärme aktivierbaren Härter enthält, wobei das stöchiometrische Verhältnis zwischen Prepolymer und Härter so gewählt wird, so dass bei Erwärmung auf Temperaturen von 60 bis 180°C nur eine Teilvernetzung möglich ist und ein Produkt mit hochviskosen bis plastischen Eigenschaften erhalten wird. Als Härter werden Dicyandiamide oder das Natriumchlorid-Komplex-Salz von 4,4'-Diaminodiphenylmethan genannt.

Des Weiteren gibt es Polyurethan-Zusammensetzungen, die sowohl durch Hitze als auch durch Feuchtigkeit härtbar sind. Verläuft der Härtungsvorgang bei Feuchtigkeit und bei Hitze über die gleichen Mechanismen und sind die mechanischen Eigenschaften des gehärteten Produkts im Wesentlichen oder zumindest weitgehend unabhängig von der Art der Härtung, spricht man von einem "Dual-Cure"-System. Verlaufen die Härtungswege über unterschiedliche Mechanismen, werden üblicherweise unterschiedliche mechanische Eigenschaften erhalten, d.h. es liegt kein "Dual-Cure"-System im eigentlichen Sinne vor.

Die WO 88/06165 (Teroson GmbH) beschreibt beispielsweise hitze- und feuchtigkeitshärtende Einkomponenten-Polyurethan-Dicht- und Klebmittel, die ein Isocyanat-haltiges Prepolymer aus aromatischen Diisocyanaten und Polyolen, einen Katalysator für die Feuchtigkeitshärtung und ein blockiertes, durch Hitze aktivierbares Vernetzungsmittel wie eine Methylendianilin/Natriumchlorid-Komplexverbindung oder mikroverkapselte polyamin- oder polyhydroxyfunktionelle Verbindungen enthalten. Die Verkapselung besteht aus einem polymeren Material und verfügt über einen Erweichungspunkt von über 60°C. Als polyamin- oder polyhydroxyfunktionelle Verbindungen werden niedermolekulare difunktionelle Amine oder Alkohole eingesetzt, welche bei Temperaturen oberhalb 60°C flüssig sind.

Die WO 2015/040097 A1 (Sika Technology AG) bezieht sich auf die Verwendung einer Komplexverbindung aus 4,4'-Methylendianilin und einem Natriumsalz als Härter in einer Dual-Cure-Polyurethan-Zusammensetzung, wobei die Komplexverbindung zugleich für die Feuchtigkeitshärtung und die Hitzehärtung als Härter wirksam ist.

US 5 231 147 A (Rheox Inc.) offenbart eine Polyurethan-Zusammensetzung, welche ein Amin-terminiertes, bei Raumtemperatur festes Polyamidharz enthält. Dieses Polyamidharz wird bei erhöhten Temperaturen aktiviert und wirkt als Härter in der Zusammensetzung.

Bei derzeit bekannten hitzehärtbaren Polyurethan-Zusammensetzungen stellt sich aber meist das Problem, dass eine unvollständige Umsetzung des Härters während der Aushärtung, z.B. bei zu tiefen Aushärtungstemperaturen, dazu führen kann, dass der Härter als ölige Flüssigkeit aus dem ausgehärteten Produkt austritt, was natürlich unerwünscht ist. Zudem erschwert dies die Formulierung von Polyurethan-Zusammensetzungen mit Dual-Cure-Eigenschaften. Andere hitzehärtbare Polyurethan-Zusammensetzungen sind aufwändig in der Herstellung (z.B. wenn eine Mikroverkapselung erforderlich ist), nicht ausreichend lagerstabil oder nicht in gewünschte Masse gezielt aktivier- und aushärtbar.

Es besteht daher nach wie vor Bedarf nach verbesserten Lösungen, welche die genannten Nachteile nicht oder in geringerem Masse aufweisen.

### Darstellung der Erfindung

Aufgabe der Erfindung ist daher die Bereitstellung einer Polyurethan-Zusammensetzung, die die vorstehend genannten Nachteile überwindet und sich im Besonderen als einkomponentige Kleb- und/oder Dichtstoff-Zusammensetzung eignet. Bevorzugt soll die Zusammensetzung auch bei höheren Umgebungstemperaturen möglichst lange lagerstabil sein. Weiter wird angestrebt, dass die Zusammensetzung möglichst stabil gegenüber der Entmischung oder der Segregation von Komponenten ist, dies insbesondere auch bei einer nur teilweisen oder unvollständigen Hitzeaushärtungsreaktion, wie sie z.B. bei zu tiefen Aushärtungstemperaturen auftreten kann. Besonders bevorzugt kann die Zusammensetzung zudem sowohl durch Hitze als auch durch Luftfeuchtigkeit gehärtet werden. Dies im Speziellen so, dass die mechanischen Eigenschaften des gehärteten Produkts im Wesentlichen oder zumindest weitgehend unabhängig von der Art der Härtung sind, so dass die Zusammensetzung als Dual-Cure-System eingesetzt werden kann.

Es wurde überraschenderweise festgestellt, dass die Aufgabe durch eine Verwendung gemäss Anspruch 1 gelöst werden kann. Kern der Erfindung ist demnach die Verwendung einer Stickstoffverbindung mit einem Schmelzpunkt von mindestens 65°C als Härter für die Hitzehärtung in einer hitzehärtbaren einkomponentigen Polyurethan-Zusammensetzung, die ein Prepolymer mit Isocyanat-Endgruppen aus mindestens einem Polyisocyanat und mindestens einem Polyol umfasst, wobei die feste Stickstoffverbindung ausgewählt ist aus einem Polyamin, einem Hydrazid oder Mischungen daraus, wobei das Polyamin ein Epoxid-Amin-Addukt ist.

Es hat sich gezeigt, dass sich die erfindungsgemässen Stickstoffverbindungen gezielt als Härter in typischen 1K Polyurethan-Zusammensetzungen einsetzen lassen. So lassen sich lagerstabile 1K hitzehärtbare Polyurethan-Zusammensetzungen bereitstellen, welche sich als Kleb- und/oder Dichtstoffe eignen und ab einer definierten Temperatur, z.B. im Bereich von 80 - 120 °C oder darüber, gezielt ausgehärtet werden können.

Zudem sind Zusammensetzungen erhältlich, welche auch bei unvollständigen Hitzeaushärtungsreaktion, wie sie z.B. bei zu tiefen Aushärtungstemperaturen auftreten, stabil gegenüber der Entmischung der Komponenten sind. Im Besonderen kann das Problem des Austretens von öligen Flüssigkeiten aus dem ausgehärteten Produkt wirksam verhindert werden.

Ohne an die Theorie gebunden zu sein, wird davon ausgegangen, dass dies darauf zurückzuführen ist, dass die als Härter verwendeten Stickstoffverbindungen zusätzlich zur speziell selektierten chemischen Struktur in Form von Polyaminen und/oder Hydraziden einen relativ hohen Schmelzpunkt haben, welcher dafür sorgt, dass allenfalls nicht umgesetzter Härter, in nicht reagiertem Zustand im ausgehärteten Produkt verbleibt. Selbst wenn in einer hitzehärtenden Zusammensetzung ein gewisser Anteil des Prepolymers vor der eigentlichen Hitzehärtung durch Feuchtigkeit aushärtet, so dass sich das Verhältnis von verfügbaren Prepolymeren zum Härter verschiebt, stellt der Überschuss an Härter kein Problem hinsichtlich Segregation dar.

Weiter hat sich gezeigt, dass sich durch die erfindungsgemässe Verwendung Polyurethan-Zusammensetzungen mit Dual-Cure-Eigenschaften herstellen lassen. Mit anderen Worten sind also Polyurethan-Zusammensetzungen erhältlich, welche sowohl durch Hitze als auch durch Luftfeuchtigkeit gehärtet werden können, wobei die mechanischen Eigenschaften des gehärteten Produkts im Wesentlichen oder zumindest weitgehend unabhängig von der Art der Härtung sind. Dies trifft im Besonderen dann zu, wenn die als Härter verwendete Stickstoffverbindung Hydrazide umfasst oder daraus besteht.

Die durch die erfindungsgemässe Verwendung erhältlichen Polyurethan-Zusammensetzungen lassen sich unter anderem als Kleb- und Dichtstoffe in der industriellen Fertigung einsetzen, im Besonderen als Dichtstoffe im Fahrzeugbau.

Ein weiterer Vorteil der vorliegenden Erfindung besteht darin, dass auf problematische Substanzen, wie z.B. das gemäss REACH-Verordnung als besonders besorgniserregender Stoff (SVHC) klassierte 4,4'-Methylendianilin, verzichtet werden kann bzw. in unerwartetem Masse vorteilhafte Alternativen bereitgestellt werden.

Des Weiteren kann die Stickstoffverbindung als Feststoff, insbesondere als Pulver, direkt mit dem Prepolymer vermischt werden, ohne dass der Härter speziell behandelt werden muss, z.B. durch Verkapselung, oder anderweitige aufwändige Massnahmen getroffen werden müssen.

Weitere Aspekte der Erfindung sind Gegenstand weiterer unabhängiger Ansprüche. Besonders bevorzugte Ausführungsformen der Erfindung sind Gegenstand der abhängigen Ansprüche

### Weg zur Ausführung der Erfindung

Ein erster Aspekt der vorliegenden Erfindung betrifft die Verwendung einer Stickstoffverbindung mit einem Schmelzpunkt von mindestens 65°C als Härter für die Hitzehärtung in einer hitzehärtbaren einkomponentigen Polyurethan-Zusammensetzung, die ein Prepolymer mit Isocyanat-Endgruppen aus mindestens einem Polyisocyanat und mindestens einem Polyol umfasst, wobei die Stickstoffverbindung ausgewählt ist aus einem Polyamin, einem Hydrazid oder Mischungen daraus, wobei das Polyamin ein Epoxid-Amin-Addukt ist..

Mit "Poly" beginnende Verbindungsnamen bezeichnen Substanzen, die zwei oder mehr der in ihrem Namen vorkommenden funktionellen Gruppen pro Molekül enthalten. Bei den Verbindungen kann es sich um monomere, oligomere oder polymere Verbindungen handeln. Ein Polyol ist z.B. eine Verbindung mit zwei oder mehr Hydroxylgruppen. Ein Polyisocyanat ist eine Verbindung mit zwei oder mehr Isocyanatgruppen.

Isocyanat-reaktive Verbindungen sind Verbindungen, die mindestens eine Isocyanat-reaktive Gruppe aufweisen, die mit Isocyanatgruppen unter Bildung einer chemischen Bindung reagieren kann.

Eine einkomponentige Polyurethan-Zusammensetzung bedeutet eine Zusammensetzung, bei der die Bestandteile in einer Komponente vermischt vorliegen. In der Regel ist eine einkomponentige Zusammensetzung bei Raumtemperatur (z.B. 23°C) und, wenn ein feuchtigkeitshärtbares System vorliegt, bei Ausschluss von Luftfeuchtigkeit zumindest über eine gewisse Zeit (z.B. mindestens 1 Monat) lagerstabil, ohne dass sie sich in wesentlichem Masse bezüglich ihrer Zusammensetzung oder ihrer Eigenschaften verändert.

Der Begriff "lagerstabil" bezeichnet die Eigenschaft einer Substanz oder einer Zusammensetzung, dass sie bei Raumtemperatur in einem geeigneten Gebinde während mehreren Wochen bis 6 Monate und mehr aufbewahrt werden kann, ohne dass sie sich in ihren Anwendungs- oder Gebrauchseigenschaften durch die Lagerung in einem für ihren Gebrauch relevanten Ausmaß verändert.

Das mittlere Molekulargewicht bedeutet hier Zahlenmittel des Molekulargewichts (Mn), welches durch Gelpermeationschromatographie (GPC) gegen Polystyrol-Standard ermittelt werden kann.

Alle folgenden Angaben, insbesondere zur Polyurethan-Zusammensetzung, zum Verfahren und zu den Verwendungen, gelten naturgemäß für die erfindungsgemäße Verwendung, das erfindungsgemäße Verfahren, die daraus erhältlichen Produkte und die erfindungsgemäßen Kleb- und/oder Dichtstoff-Zusammensetzungen gleichermaßen, auch wenn darauf nicht eigens hingewiesen wird.

Unter Hitzehärtung wird die Härtung bei einer erhöhten Temperatur von z.B. mindestens 80°C, insbesondere mindestens 100°C, im Speziellen mehr als 120°C verstanden. Die Hitzehärtung wird insbesondere bei einer Temperatur oberhalb des Schmelzpunkts der Stickstoffverbindung durchgeführt. Die Hitzehärtung ist insbesondere unabhängig von Feuchtigkeit (wie Luftfeuchtigkeit) oder anderen externen Einflüssen mit Ausnahme der zugeführten Wärme.

Bei der Hitzehärtung wird die Polyurethan-Zusammensetzung nach der Applikation gleichzeitig überall gehärtet. Dagegen erfolgt bei der Feuchtigkeitshärtung eine diffusionsgesteuerte Härtung der Polyurethan-Zusammensetzung nach der Applikation von außen nach innen. Unter Feuchtigkeitshärtung wird die Härtung unter Feuchtigkeit, insbesondere Luftfeuchtigkeit, verstanden. Die Feuchtigkeitshärtung wird in der Regel bei einer Temperatur von nicht mehr als 40°C durchgeführt, wobei die Feuchtigkeitshärtung gewöhnlich bei Raumtemperatur durchgeführt wird, also z.B. bei Temperaturen unter 35°C, z.B. bei etwa 23°C.

Die erfindungsgemäße Polyurethan-Zusammensetzung umfasst ein Prepolymer mit Isocyanat-Endgruppen aus mindestens einem Polyisocyanat, und mindestens einem Polyol. Es können auch Mischungen von zwei oder mehr solcher Prepolymere verwendet werden. Prepolymere mit Isocyanat-Endgruppen sind dem Fachmann bekannt. Das Prepolymer weist mindestens zwei Isocyanat-Endgruppen und vorzugsweise genau zwei Isocyanat-Endgruppen auf. Über die Isocyanat-Endgruppen kann das Prepolymer durch Reaktion mit Verbindungen, die Isocanat-reaktive Gruppen, wie z.B. Wasser, Hydroxylgruppen oder Amingruppen, aufweisen, kettenverlängert bzw. vernetzt werden, was die Härtung der Polyurethan-Zusammensetzung bewirkt. Die Ausdrücke "Härtung" oder "Vernetzung" schließen hier im Folgenden auch Kettenverlängerungsreaktionen ein

Bei dem Prepolymer mit Isocyanat-Endgruppen aus mindestens einem Polyisocyanat und mindestens einem Polyol handelt es sich um ein Polyurethan-Prepolymer, das durch Umsetzung von mindestens einem Polyisocyanat und mindestens einem Polyol hergestellt wird. Der Fachmann kann solche Prepolymere ohne weiteres herstellen.

Die Umsetzung des mindestens einen Polyols mit mindestens einem Polyisocyanat kann z.B. dadurch erfolgen, dass die Polyol-Komponente und die Polyisocyanat-Komponente mit üblichen Verfahren, z.B. bei Temperaturen von 50 bis 100 °C, gegebenenfalls unter Anwesenheit eines geeigneten Katalysators, zur Reaktion gebracht werden, wobei das Polyisocyanat im stöchiometrischen Überschuss eingesetzt wird. Zur Reaktionsmischung können gegebenenfalls nach Bedarf Zusatzstoffe wie Lösemittel und/oder Weichmacher zugesetzt werden. Als Reaktionsprodukt entsteht das Prepolymer mit Isocyanatendgruppen. Lösemittel, falls eingesetzt, können nach der Umsetzung wieder entfernt werden. Weichmacher, sofern eingesetzt, können vorzugsweise im erhaltenen Produkt verbleiben.

Bei dem Polyisocyanat zur Bildung des Prepolymers mit Isocyanat-Endgruppen handelt es sich bevorzugt um ein Polyisocyanat, insbesondere ein Diisocyanat, das aus aliphatischen Polyisocyanaten und/oder aromatische Polyisocyanaten ausgewählt ist. Es können ein solches Polyisocyanat oder zwei oder mehr solche Polyisocyanate eingesetzt werden. Bevorzugt ist ein aliphatisches Polyisocyanat.

Ein aliphatisches Polyisocyanat ist eine aliphatische Verbindung, die mindestens zwei Isocyanatgruppen aufweist. Bevorzugt ist ein aliphatisches Diisocyanat. Es kann sich um ein acyclisches oder cyclisches aliphatisches Polyisocyanat handeln, wobei ein cyclisches aliphatisches Polyisocyanat bevorzugt ist. Vorzugsweise handelt es sich um ein gesättigtes aliphatisches Polyisocyanat. Diese Polyisocyanate sind bekannt und im Handel erhältlich.

Beispiele für ein geeignetes aliphatisches Polyisocyanat sind 1,6-Hexamethylendiisocyanat, 2,2,4- und 2,4,4-Trimethyl-1,6-hexamethylendiisocyanat, 1,12-Dodecamethylendiisocyanat, Cyclobutan-1,3-diisocyanat, Cyclohexan-1,3- und 1,4-diisocyanat und Mischungen dieser Isomere, Isophorondiisocyanat (IPDI, 1-Isocyanato-3,3,5-trimethyl-5-isocyanatomethyl-cyclohexan), 2,4- und 2,6-Hexahydrotoluylendiisocyanat, Hexahydro-1,3- und -1,4-phenyl-diisocyanat, Perhydro-2,4'- und -4,4'-diphenylmethandiisocyanat, und Mischungen der vorgenannten Isocyanate. Besonders bevorzugt ist Isophorondiisocyanat (IPDI) und Hexamethylen-1,6-diisocyanat (HDI).

Beispiele für ein geeignetes aromatisches Polyisocyanat sind 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI), 1,4-Phenylendiisocyanat (PDI), und/oder Naphthalin-1,5-diisocyanat (NDI).

Besonders bevorzugt als Polyisocyanat sind 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI), Isophorondiisocyanat (IPDI).

Zur Bildung des Prepolymers mit Isocyanat-Endgruppen wird das mindestens eine Polyisocyanat mit einem oder mehreren Polyolen umgesetzt. Es können alle Polyole eingesetzt werden, die für die Polyurethanchemie üblich sind. Geeignete Polyole sind in großer Vielfalt im Handel erhältlich.

Das Polyol weist bevorzugt ein mittleres Molekulargewicht bzw., sofern es sich um ein nicht polymeres Polyol handelt, ein Molekulargewicht von 250 bis 30.000 g/mol und bevorzugt von 400 bis 20.000 g/mol auf.

Das Polyol weist ferner bevorzugt eine mittlere OH-Funktionalität im Bereich von 1.6 bis 3 auf. Es versteht sich, dass polymere Verbindungen auch aus Nebenreaktionen gebildete Substanzen enthalten können, die z.B. nur eine oder keine Hydroxygruppe aufweisen.

Bevorzugt ist das Polyol ein Diol oder Triol mit einer OH-Zahl im Bereich von 8 bis 185 mg KOH/g, insbesondere im Bereich von 10 bis 120 mg KOH/g.

Als Polyole können beispielsweise die folgenden handelsüblichen Polyole oder Mischungen davon eingesetzt werden:
a) Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, z.B. hergestellt mit Hilfe von anionischen Katalysatoren wie NaOH, KOH, CsOH oder Alkalialkoholaten.
   Besonders geeignet sind Polyoxyalkylendiole oder Polyoxyalkylentriole, insbesondere Polyoxyethylen- und Polyoxypropylendi- und -triole. Speziell geeignet sind Polyoxyalkylendiole und -triole mit einem Ungesättigtheitsgrad kleiner als 0,02 mEq/g und mit einem mittleren Molekulargewicht im Bereich von 1.000 bis 30.000 g/mol, sowie Polyoxypropylendiole und -triole mit einem mittleren Molekulargewicht von 400 bis 8.000 g/mol.
   Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
b) Styrol-Acrylnitril- oder Acrylnitril-Methylmethacrylat-gepfropfte Polyetherpolyole.
c) Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
   Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.
d) Polycarbonatpolyole, wie sie z.B. durch Umsetzung der oben genannten - zum Aufbau der Polyesterpolyole eingesetzten - Alkohole mit Dialkylcarbonaten, Diarylcarbonaten oder Phosgen zugänglich sind.
e) Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
f) Polyacrylat- und Polymethacrylatpolyole.
g) Polyhydroxyfunktionelle Fette und Öle, beispielsweise natürliche Fette und Öle, insbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschließender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschließender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
h) Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/Butadien-Copolymere, wie sie beispielsweise aus Epoxiden oder Aminoalkoholen und carboxylterminierten Acrylonitril/Butadien-Copolymeren hergestellt werden können; sowie hydrierte polyhydroxyfunktionelle Polymere oder Copolymere von Dienen.

Bevorzugt liegt das NCO/OH-Verhältnis bei der Umsetzung zwischen Polyisocyanat und dem Polyol im Bereich von 3/1 bis 10/1, besonders bevorzugt im Bereich von 3/1 bis 8/1, insbesondere im Bereich von 4/1 bis 7/1.

Bevorzugt hat das Prepolymer einen NCO-Gehalt im Bereich von 0.5 bis 10 Gewichts-%, bevorzugt 0.6 bis 8.4 Gewichts-%, insbesondere 0.8 bis 7 Gewichts-%.

Insbesondere verfügt das Prepolymer mit Isocyanat-Endgruppen aus mindestens einem Polyisocyanat und mindestens einem Polyol über einen Gehalt an monomeren Polyisocyanaten, im Speziellen monomeren Diisocyanaten, von höchstens 0.5 Gewichts-%, bevorzugt höchstens 0.3 Gewichts-%, insbesondere höchstens 0.2 Gewichts-%, im Speziellen höchstens 0.1 Gewichts-%.

Ein solches Prepolymer ist besonders geeignet für die Herstellung von Zubereitungen, wie insbesondere elastische Klebstoffe, Dichtstoffe und Beschichtungen, welche einen Gehalt an monomeren Polyisocyanaten, insbesondere monomeren Diisocyanaten, von weniger als 0.1 Gewichts-% aufweisen; diese sind auch ohne besondere Schutzvorkehrungen sicher in der Handhabung und können damit in vielen Ländern ohne Gefahrenkennzeichnung verkauft werden.

Es hat sich zudem gezeigt, dass Prepolymere mit einem niederen Anteil an monomeren Polyisocyanaten bei der Verwendung mit den erfindungsgemäss verwendeten Stickstoffverbindungen besonders vorteilhafte Polyurethan-Zusammensetzungen ergeben, bei welchen die erfindungsgemässen Vorteile im Besonderen Masse zum Vorschein kommen.

Die Umsetzung zwischen dem Polyisocyanat und dem Polyol wird bevorzugt unter Feuchtigkeitsausschluss bei einer Temperatur im Bereich von 20 bis 160 °C, insbesondere 40 bis 140 °C, durchgeführt, gegebenenfalls in Anwesenheit geeigneter Katalysatoren.

Nach der Umsetzung kann das im Reaktionsgemisch verbleibende monomere Polyisocyanat, insbesondere das verbleibende monomere Diisocyanat, bis auf den beschriebenen Restgehalt mittels eines geeigneten Trennverfahrens entfernt.

Als Trennverfahren bevorzugt ist ein destillatives Verfahren, insbesondere Dünnschichtdestillation oder Kurzwegdestillation, bevorzugt unter Anlegen von Vakuum.

Besonders bevorzugt ist ein mehrstufiges Verfahren, bei welchem das monomere Polyisocyanat oder Diisocyanat in einem Kurzwegverdampfer bei einer Manteltemperatur im Bereich von 120 bis 200 °C und einem Druck von 0.001 bis 0.5 mbar entfernt wird.

Im Fall des bevorzugten IPDI als monomeres Diisocyanat liegt die Manteltemperatur bevorzugt im Bereich von 140 bis 180 °C.

Bevorzugt erfolgt die Umsetzung des monomeren Polyisocyanat, insbesondere des monomeren Diisocyanats, und des Polyols und das anschliessende Entfernen des im Reaktionsgemisch verbliebenen monomeren Polyisocyanat ohne Einsatz von Lösemitteln und/oder Schleppmitteln. Bevorzugt wird das nach der Umsetzung entfernte monomere Polyisocyanat anschliessend wiederverwendet, d.h. erneut für die Herstellung von Isocyanatgruppen-haltigem Polymer eingesetzt.

Bei der Umsetzung reagieren die OH-Gruppen des Polyols mit den Isocyanatgruppen des monomeren Polyisocyanat, insbesondere des monomeren Diisocyanats. Dabei kommt es auch zu sogenannten Kettenverlängerungsreaktionen, indem OH-Gruppen und/oder Isocyanatgruppen von Umsetzungsprodukten zwischen Polyol und monomerem Polyisocyanat reagieren. Je höher das NCO/OH-Verhältnis gewählt wird, desto weniger Kettenverlängerungsreaktionen finden statt, und desto niedriger ist die Polydispersität und somit die Viskosität des erhaltenen Polymers. Ein Mass für die Kettenverlängerungsreaktion ist das mittlere Molekulargewicht des Polymers bzw. die Breite und Verteilung der Peaks in der GPC-Analyse. Ein weiteres Mass ist der effektive NCO-Gehalt des Monomer-befreiten Polymers im Verhältnis zum theoretischen NCO-Gehalt berechnet aus der Umsetzung jeder OH-Gruppe mit einem monomeren Polyisocyanat.

Bevorzugt hat das Isocyanatgruppen-haltige Polymer mit niedrigem Gehalt an monomeren Polyisocyanat eine Viskosität bei 20 °C von höchstens 50 Pa·s, insbesondere höchstens 40 Pa·s, besonders bevorzugt höchstens 30 Pa·s. Dabei wird die Viskosität bestimmt mit einem Kegel-Platten-Viskosimeter mit einem Kegeldurchmesser 25 mm, Kegelwinkel 1°, Kegelspitze-PlattenAbstand 0.05 mm bei einer Scherrate von 10 s⁻¹.

Mit den bevorzugten Isocyanatgruppen-haltigen Polymeren bzw. Prepolymeren können hochwertige, gut verarbeitbare hitzehärtende und Polyurethan-Zusammensetzungen erhalten werden.

Ein besonders bevorzugtes Prepolymer mit niedrigem Gehalt an monomeren Polyisocyanaten hat einen NCO-Gehalt im Bereich von 1 bis 2.5 Gewichts-%, bevorzugt 1.1 bis 2.1 Gewichts-%, bezogen auf alle Repetiereinheiten im Polyethersegment; 80 bis 100 Gewichts-%, insbesondere 80 bis 90 Gewichts-%, 1,2-Propylenoxy-Gruppen und 0 bis 20 Gewichts-%, insbesondere 10 bis 20 Gewichts-%, 1,2-Ethylenoxy-Gruppen; einen Gehalt an monomerem Polyisocyanat von höchstens 0.3 Gewichts-% und ist erhalten aus der Umsetzung von IPDI mit einem Polyether-Triol mit einer mittleren OH-Funktionalität im Bereich von 2.2 bis 3, bevorzugt 2.2 bis 2.8, insbesondere 2.2 bis 2.6 und einer OH-Zahl im Bereich von 10 bis 42 mg KOH/g, insbesondere 20 bis 35 mg KOH/g.

Ein weiteres besonders bevorzugtes Prepolymer mit niedrigem Gehalt an monomeren Polyisocyanaten hat einen NCO-Gehalt im Bereich von 2.8 bis 7 Gewichts-%, bezogen auf alle Repetiereinheiten im Polyethersegment; 100 % Propylenoxy-Gruppen, einen Gehalt an monomerem Polyisocyanat von höchstens 0.3 Gewichts-% und ist erhalten aus der Umsetzung von IPDI mit mindestens einem PolyetherDiol mit einer OH-Zahl im Bereich von 44 bis 120 mg KOH/g.

Der Anteil an Prepolymer mit Isocyanat-Endgruppen aus mindestens einem Polyisocyanat und mindestens einem Polyol in der Polyurethan-Zusammensetzung kann z.B. im Bereich von 10 bis 90 Gew.-%, insbesondere von 15 -70 Gew.-%, bevorzugt 20 - 50 Gew.-%, im Besonderen 25 - 45 Gew.-%, liegen.

Die als Härter verwendete Stickstoffverbindung ist ausgewählt aus einem Polyamin, einem Hydrazid oder Mischungen daraus, wobei das Polyamin ein Epoxid-Amin-Addukt ist.

Hydrazide sind eine Klasse von Verbindungen, die eine funktionelle Gruppe haben, in der zwei Stickstoff-Atome über eine kovalente Bindung verknüpft sind. Im Besonderen handelt es sich bei den Hydraziden vorliegend um organische Hydrazide. Dies sind typischerweise Derivate von organischen Säuren, wie beispielsweise Carbonsäuren und/oder Sulfonsäuren. Carbonsäurehydrazide tragen als Substituent nebst wenigstens einer Hydrazidgruppe mindestens eine Acylgruppe während Sulfonsäurehydrazide als Substituent nebst wenigstens einer Hydrazidgruppe mindestens eine Sulfonylgruppe tragen.

Unter einem Polyamin wird vorliegend eine organische Verbindung mit wenigstens zwei oder mehr Aminogruppen verstanden. Im Besonderen sind die wenigstens zwei Aminogruppen endständig angeordnet.

Insbesondere ist die verwendete Stickstoffverbindung partikelförmig, bevorzugt pulverförmig. Gemäss einer vorteilhaften Ausführungsform liegt die Stickstoffverbindung als Pulver mit einem D90-Wert der Partikelgrösse von 50 µm, insbesondere 20 µm, besonders bevorzugt 10 µm, vor. Die Bestimmung der Partikelgrösse erfolgt z.B. wie in der ISO 13320:2020 beschrieben.

Die Stickstoffverbindung wird bei der erfindungsgemässen Verwendung mit dem Prepolymer vermischt, bevorzugt so, dass die Stickstoffverbindung gleichmässig im Prepolymer verteilt ist. Im Besonderen bildet das Prepolymer vor der Härtung eine kontinuierliche Phase, in welcher die partikelförmige Stickstoffverbindung dispergiert ist.

Die Stickstoffverbindung ist in der Polyurethan-Zusammensetzung bevorzugt in direkten Kontakt mit dem Prepolymer. Entsprechend liegt die Stickstoffverbindung in freier und/oder unverkapselter Form vor. Ein direkter Kontakt zwischen Stickstoffverbindung und Prepolymer hat den Vorteil, dass die Hitzehärtung unmittelbar mit der Verflüssigung der Stickstoffverbindung aktiviert werden kann, wodurch eine gezielte und rasche Aushärtung ermöglicht wird. Zudem steht die Stickstoffverbindung auch bei einer allfälligen Feuchtigkeitshärtung frei zur Verfügung und kann, je nach Reaktionsmechanismus, am Härtungsprozess teilnehmen. Ohne an die Theorie gebunden zu sein, wird vermutet, dass das bei der Feuchtigkeitshärtung in die Polyurethan-Zusammensetzung eindringende Wasser, die feste Stickstoffverbindung zumindest teilweise löst, so dass diese am Feuchtigkeitshärtungsprozess mitwirken kann. Dies dürfte ein Grund sein, wieso die erfindungsgemässen Polyurethan-Zusammensetzungen mit Dual-Cure-Eigenschaften formuliert werden können.

Weiter ist es bevorzugt, wenn die Polyurethan-Zusammensetzung frei von mittels Aldehyd und/oder Keton blockierten Aminen ist. Im Besonderen ist die Polyurethan-Zusammensetzung frei von Aldiminen, Ketiminen, Enaminen und/oder Oxazolidinen. Damit kann im Besonderen die Gefahr reduziert werden, dass es zu unerwünschten Ausgasungen von Aldehyden und/oder Ketonen, kommt.

Besonders bevorzugt weist die Stockstoffverbindung einen Schmelzpunkt von mindestens 75°C, bevorzugt mindestens 100°C, im Speziellen mindestens 110°C, besonders bevorzugt mindestens 150°C. Damit können besonders grosse Lagerstabilitäten erreicht werden und zugleich wird die Segregation bei nur teilweise umgesetztem Härter effektiv reduziert.

Gemäss einer besonders bevorzugten Ausführungsform umfasst die Stickstoffverbindung ein Hydrazid, im Besonderen ein Dihydrazid, oder sie besteht daraus.

Das Hydrazid ist bevorzugt ein Hydrazid einer Carbon- und/oder einer Sulfonsäure. Insbesondere handelt es sich um ein Hydrazid der Formel (la) oder (Ib) oder (Ic): 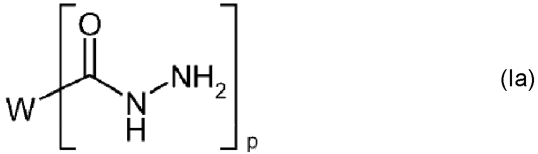 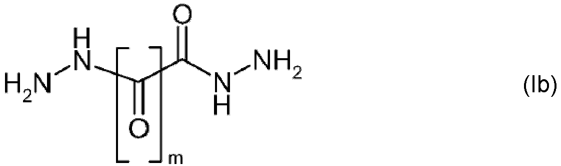 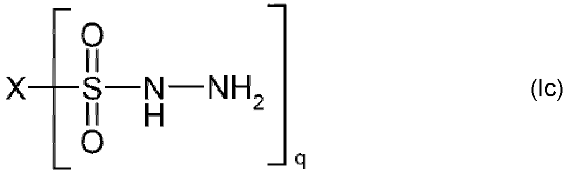 wobei:
W für den p-wertigen Rest einer Carbonsäure nach Entfernung von p Carbonsäuregruppen steht;
X für den q-wertigen Rest einer Sulfonsäure nach Entfernung von q Sulfonsäuregruppen steht;
m für 0 oder 1 steht;
p für 1, 2, 3 oder 4, bevorzugt für 2, steht; und
q für 1, 2, 3 oder 4 steht.

Im Besonderen ist das Hydrazid ein Carbonsäurehydrazid, insbesondere ein Carbonsäuredihydrazid, bevorzugt ausgewählt aus der Gruppe bestehend aus Carbodihydrazid, Oxalsäuredihydrazid, Bernsteinsäuredihydrazid, Adipinsäuredihydrazid, Korksäuredihydrazid, Azelainsäuredihydrazid, Sebacinsäuredihydrazid, Dodecansäuredihydrazid und Isophtalsäuredihydrazid, meist bevorzugt Adipinsäuredihydrazid.

Mit derartigen Hydraziden, welche kommerziell bei verschiedenen Anbietern erhältlich sind, lassen sich unter anderem Polyurethan-Zusammensetzungen mit ausgeprägten Dual-Cure-Eigenschaften herstellen.

Falls als Stickstoffverbindung ein Hydrazid verwendet wird, werden als Prepolmyere bevorzugt solche verwendet, welche mit Isophorondiisocyanat (IPDI) und/oder 2,2'-Diphenylmethandiisocyanat (MDI) gebildet werden; wobei das Prepolymer über einen Gehalt an monomeren Polyisocyanaten, im Speziellen monomeren Diisocyanaten, von höchstens 0.5 Gewichts-%, bevorzugt höchstens 0.3 Gewichts-%, insbesondere höchstens 0.2 Gewichts-%, im Speziellen höchstens 0.1 Gewichts-%, aufweist.

Gemäss einer weiteren vorteilhaften Ausführungsform umfasst die Stickstoffverbindung ein Polyamin oder sie besteht daraus, wobei das Polyamin ein Epoxid-Amin-Addukt ist.

Das Polyamin verfügt vorzugsweise über sekundäre und/oder tertiäre Aminogruppen. Im Besonderen ist das Polyamin frei von primären Aminogruppen.

Besonders bevorzugt verfügt das Polyamin über endständige tertiäre Aminogruppen und sekundäre Aminogruppen.

Eine Aminzahl des Polyamins beträgt mit Vorteil 150 - 220 mg KOH/g, insbesondere 170 - 190 mg KOH/g.

Dabei handelt es sich beim Polyamin um ein Epoxid-Amin-Addukt, wobei das Epoxid-Amin-Addukt insbesondere erhältlich ist durch Umsetzen eines Bisphenoldiglycidylethers mit einem aliphatischen Polyamin. Das aliphatische Polyamin ist insbesondere ein Diamin, besonders bevorzugt ein Diamin mit einer primären Amingruppe und einer sekundären Amingruppe und/oder ein Diamin mit einer primären Amingruppe und einer tertiären Amingruppe.

Im Speziellen handelt es sich um ein Addukt, wie es in der EP 0 365 984 A2, auf Seite 5, Zeilen 8 - 16 beschrieben ist.

Derartige Polyamine sind zudem kommerziell erhältlich, beispielsweise unter der Bezeichnung Ancamine 2014 AS oder Ancamine 2014 FG (Evonik , Deutschland).

Falls als Stickstoffverbindung ein Polyamin verwendet wird, werden als Prepolmyere bevorzugt solche verwendet, welche
(i) mit Isophorondiisocyanat (IPDI), und/oder 2,4-Toluylendiisocyanat oder Gemische davon mit 2,6-Toluylendiisocyanat (TDI) gebildet werden oder
(ii) mit Isophorondiisocyanat (IPDI), 2,4-Toluylendiisocyanat oder Gemische davon mit 2,6-Toluylendiisocyanat (TDI),4,4'-Diphenylmethandiisocyanat, gegebenenfalls mit Anteilen von 2,4'- und/oder 2,2'-Diphenylmethandiisocyanat (MDI) gebildet werden; wobei das Prepolymer über einen Gehalt an monomeren Polyisocyanaten, im Speziellen monomeren Dissiocyanaten, von höchstens 0.5 Gewichts-%, bevorzugt höchstens 0.3 Gewichts-%, insbesondere höchstens 0.2 Gewichts-%, im Speziellen höchstens 0.1 Gewichts-%, auf weist.

Die Stickstoffverbindung wird vorzugsweise mit einem Anteil von 0.1 -15, Gew.-%, bevorzugt 0.5 - 10 Gew.-%, im Besonderen 0.7 - 5 Gew.-%, bezogen auf das Gesamtgewicht der hitzehärtbaren Polyurethan-Zusammensetzung verwendet wird.

Die erfindungsgemäße Polyurethan-Zusammensetzung kann gegebenenfalls ferner ein oder mehrere weitere, in der Polyurethanindustrie üblicherweise eingesetzte Hilfs- und Zusatzstoffe als Additive enthalten.

Beispiele für solche Additive sind Weichmacher, z.B. Ester organischer Carbonsäuren oder deren Anhydride, Phthalate, z.B. Dioctylphthalat oder Diisodecylphthalat, Adipate, z.B. Dioctyladipat, Sebacate, organische Phosphor- und Sulfonsäureester und Polybutene; Lösemittel; anorganische und organische Füllstoffe, z.B. gemahlene oder gefällte Calciumcarbonate, Russe, Kaoline, Aluminiumoxide, Kieselsäuren und PVC-Pulver; Fasern, z.B aus Polyethylen; Pigmente; Rheologie-Modifizierer, z.B. Thixotropiehilfsmittel, Verdickungsmittel, wie Harnstoffverbindungen, Polyamidwachse, Bentonite oder pyrogene Kieselsäuren; Haftvermittler, insbesondere Silane, wie Epoxysilane, Vinylsilane und Isocyanatosilane; Trocknungsmittel, z.B. p-Tosylisocyanat und andere reaktive Isocyanate, Orthoameisensäureester, Calciumoxid oder Molekularsiebe; Stabilisatoren gegen Wärme, Licht- und UV-Strahlung; flammhemmende Substanzen; oberflächenaktive Substanzen wie z.B. Netzmittel, Verlaufsmittel, Entlüftungsmittel oder Entschäumer; und Fungizide oder das Pilzwachstum hemmende Substanzen.

Die Additive können bei Bedarf und je nach Anwendungszweck in geeigneten Mengen in üblicher Weise zugesetzt werden. In der Regel ist es bevorzugt, dass die Polyurethan-Zusammensetzung mindestens einen Weichmacher und/oder mindestens einen Füllstoff enthält.

Die Anteile der Bestandteile in der Polyurethan-Zusammensetzung können in weiten Bereichen je nach eingesetzten Bestandteilen und Verwendungszweck variieren. Die nachstehenden Mengenangaben für zweckmäßige und bevorzugte Ausführungsformen beziehen sich auf das Gesamtgewicht der Polyurethan-Zusammensetzung.

Besonders bevorzugt weist die hitzehärtbare Polyurethan-Zusammensetzung folgende Komponenten bezogen auf das Gesamtgewicht der hitzehärtbaren Polyurethan-Zusammensetzung auf:
a) 0.1 - 15, Gew.-%, bevorzugt 0.5 - 10 Gew.-%, im Besonderen 0.7 - 5 Gew.-%, der Stickstoffverbindung;
b) 15 - 70 Gew.-%, bevorzugt 20 - 50 Gew.-%, im Besonderen 25 - 45 Gew.-%, des Prepolymers;
c) 0 - 70 Gew.%, bevorzugt 10 - 60 Gew.-%, im Besonderen 40 - 50 Gew.-%, anorganische und/oder organische Füllstoffe, insbesondere wie vorstehend beschrieben;
d) 0 - 30 Gew.-%, bevorzugt 5 - 25 Gew.-%, im Besonderen 15 - 25 Gew.-%, Weichmacher, insbesondere wie vorstehend beschrieben;
e) 0 - 5 Gew.-%; bevorzugt 0.5 - 4 Gew.-%, im Besonderen 1 - 3 Gew.-%, Stabilisatoren, insbesondere wie vorstehend beschrieben;
f) 0 - 1 Gew.-%, bevorzugt 0.01 - 0.8 Gew.-%, im Besonderen 0.05 - 0.6 Gew.-%, Katalysatoren;
g) Optional ein oder mehrere zusätzliche Additive, deren Anteile sich auf 100 Gew.-% ergänzen.

Das Prepolymer und die Stickstoffverbindung sowie die gegebenenfalls eingesetzten weiteren Komponenten der Zusammensetzung können in beliebiger Reihenfolge miteinander vermischt werden, um die Polyurethan-Zusammensetzung zu erhalten. Einige Komponenten, wie z.B. die Stickstoffverbindung, können z.B. auch als Mischung mit einem Weichmacher zugegeben werden. Die Vermischung kann bei Raumtemperatur (z.B. 23°C) erfolgen. Sie kann z.B. auch für eine leichtere Homogenisierung bzw. Dispergierung teilweise oder vollständig bei leicht erhöhter Temperatur durchgeführt werden. Als Mischvorrichtungen können alle auf diesem Gebiet bekannten Mischvorrichtungen eingesetzt werden. Die Viskosität kann unter Berücksichtigung der beabsichtigen Verwendung beliebig eingestellt werden, z.B. kann die Polyurethan-Zusammensetzung pastös sein und bevorzugt strukturviskose Eigenschaften aufweisen.

Die hitzehärtbare Polyurethan-Zusammensetzung kann eine multikomponentige, z.B. zweikomponentige, hitzehärtbare Polyurethan-Zusammensetzung sein. Bevorzugt handelt es sich aber um eine einkomponentige hitzehärtbare Polyurethan-Zusammensetzung.

Bei der hitzehärtbaren Polyurethan-Zusammensetzung handelt sich in einer bevorzugten Ausführungsform um eine hitzehärtbare und feuchtigkeitshärtbare Polyurethan-Zusammensetzung. Im Speziellen handelt es sich in diesem Fall um eine Dual-Cure-Polyurethan-Zusammensetzung.

Die Erfindung betrifft auch ein Verfahren zur Härtung einer Polyurethan-Zusammensetzung wie sie vorstehend beschrieben ist, wobei die Polyurethan-Zusammensetzung durch Einwirkung von Hitze, optional auch von Feuchtigkeit, ausgehärtet wird.

Die Temperatur, die für Hitzehärtung eingesetzt wird, kann abhängig von der eingesetzten Polyurethan-Zusammensetzung, dem gewünschten Vernetzungsgrad und der Dauer der Hitzehärtung in weiten Bereichen variieren. Die Hitzehärtung kann z.B. bei Temperaturen im Bereich von 80 bis 160 °C durchgeführt werden. Die Dauer der Hitzehärtung kann z.B. im Bereich von 1 bis 120 min liegen.

In einer bevorzugten Ausführungsform wird die Härtung zum Teil bei Hitze durch Hitzehärtung und zum Teil bei Feuchtigkeit durch Feuchtigkeitshärtung durchgeführt, wobei eine Vorhärtung bei Hitze und anschließend eine Nachhärtung bei Feuchtigkeit besonders bevorzugt ist.

Andere Abfolgen bei Durchführung einer Kombination von Hitzehärtung und Feuchtigkeitshärtung sind ebenfalls möglich, z.B. zunächst eine Feuchtigkeitshärtung und eine anschließende Hitzehärtung zur vollständigen Aushärtung oder zunächst eine Feuchtigkeitshärtung, eine anschließende Hitzehärtung und abschließend wieder eine Feuchtigkeitshärtung zur vollständigen Aushärtung.

Die Erfindung betrifft auch ein Verfahren zum Verkleben von Fügeteilen, insbesondere Fahrzeugteile, mit der erfindungsgemäßen hitzehärtbaren Polyurethan-Zusammensetzung wie vorstehend beschrieben, umfassend:
a) das Auftragen der hitzehärtbaren Polyurethan-Zusammensetzung auf eine oder beide zu verklebende Fügeteiloberflächen,
b) Kontaktieren der zu verklebenden Fügeteiloberflächen und
c) Härten der Polyurethan-Zusammensetzung durch Hitzehärtung, insbesondere bei Temperaturen wie sie vorstehen beschrieben sind, und/oder Feuchtigkeitshärtung, bevorzugt Hitzehärtung.

Weiter betrifft die Erfindung ein Verfahren zur Abdichtung eines abzudichtenden Elements mit der erfindungsgemäßen hitzehärtbaren Polyurethan-Zusammensetzung wie vorstehend beschrieben, umfassend:
a) das Auftragen der hitzehärtbaren Polyurethan-Zusammensetzung auf und/oder in das abzudichtende Element;
b) Härten der Polyurethan-Zusammensetzung durch Hitzehärtung, insbesondere bei Temperaturen wie sie vorstehen beschrieben sind, und/oder Feuchtigkeitshärtung, bevorzugt Hitzehärtung.

Das abzudichtende Element ist insbesondere ein Substrat, eine Oberfläche, eine Fuge und/oder ein Hohlraum, insbesondere eines Fahrzeugs. In Schritt a) kann die hitzehärtbare Polyurethan-Zusammensetzung entsprechend auf das Substrat oder die Oberfläche aufgetragen werden und/oder in die Fuge und/oder in den Hohlraum eingebracht werden

Die Fügeteile bzw. die zu verklebenden Fügeteiloberflächen und/oder das abzudichtende Element können aus jedem beliebigen Material sein, wobei die zu verklebenden Fügeteiloberflächen aus dem gleichen Material oder aus verschiedenen Materialien sein können. Beispiele für geeignete Materialien sind Metall einschließlich Metalllegierungen, Glas, Kunststoff, Keramik, Textilien oder lackierte Elemente oder Fügeteile.

Das Auftragen der hitzehärtbaren Polyurethan-Zusammensetzung auf eine oder beide zu verklebende Fügeteiloberflächen oder das abzudichtende Element kann auf übliche, dem Fachmann bekannte Weise erfolgen. Zu verklebenden Fügeteiloberflächen werden kontaktiert, wobei die zu verklebenden Fügeteiloberflächen gegebenenfalls gegeneinander gepresst werden.

Die Härtung der Polyurethan-Zusammensetzung wird dann bei Hitze durch Hitzehärtung durchgeführt. Sofern es sich um eine Dual-Cure Polyurethan-Zusammensetzung handelt, kann die Härtung auch nur durch Feuchtigkeitshärtung oder eine Kombination aus Hitzehärtung und Feuchtigkeitshärtung ausgehärtet werden.

Die Erfindung betrifft auch einen Gegenstand, umfassend Fügeteile und eine gehärtete Polyurethan-Zusammensetzung als Klebverbindung der Fügeteile, der nach dem erfindungsgemäßen Verfahren erhältlich ist. Bei den Fügeteilen handelt es sich im Besonderen um Bestandteile eines Fahrzeugs.

Ebenfalls betrifft die Erfindung ein Element, insbesondere eines Fahrzeugs, mit einer gehärtete Polyurethan-Zusammensetzung wie sie vorstehend beschrieben ist, als Dichtmasse.

Die Erfindung betrifft dementsprechend auch eine hitzehärtbare Polyurethan-Zusammensetzung, insbesondere eine feuchtigkeitshärtbare und hitzehärtbare Polyurethan-Zusammensetzung, umfassend:
a) ein Prepolymer mit Isocyanat-Endgruppen aus mindestens einem Polyisocyanat, und mindestens einem Polyol und
b) eine Stickstoffverbindung mit einem Schmelzpunkt von mindestens 65°C wobei die feste Stickstoffverbindung ausgewählt ist aus einem Polyamin, einem Hydrazid oder Mischungen daraus, wobei das Polyamin ein Epoxid-Amin-Addukt ist.

Alle vorstehenden Angaben und Erläuterungen zur hitzehärtbaren Polyurethan-Zusammensetzung, z.B. bezüglich geeigneter Komponenten usw., gelten entsprechend.

Die Polyurethan-Zusammensetzung, vorzugsweise die einkomponentige Polyurethan-Zusammensetzung, eignet sich ganz allgemein zum Verkleben von einem oder mehreren Materialien gleicher oder ungleicher Beschaffenheit und insbesondere für die Verklebung im Fahrzeugbau oder bei der Fahrzeugreparatur. Ebenso eignet sich die Polyurethan-Zusammensetzung als Dichtmasse zum Abdichten eines Elements, insbesondere zur Abdichtung im Fahrzeugbau oder bei der Fahrzeugreparatur. Das Element ist beispielsweise ein Substrat, eine Oberfläche, eine Fuge und/oder ein Hohlraum.

Im Folgenden wird die Erfindung durch Beispiele weiter erläutert, die die Erfindung aber in keiner Weise beschränken sollen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Die verwendeten Chemikalien wurden, sofern nicht anders bezeichnet, von Sigma-Aldrich (Schweiz) bezogen.

### Herstellung von Prepolymeren:

### Polymer P1:

780.0 g Desmophen^{®} 5031 BT (Glycerin-gestartetes Ethylenoxid-terminiertes Polyoxypropylen-Triol, OH-Zahl 28.0 mg KOH/g, OH-Funktionalität ca. 2.3; von Covestro) und 220 g 1-Isocyanato-3,3,5-trimethyl-5-isocyanatomethylcyclohexan (Vestanat^{®} IPDI, von Evonik) wurden in Gegenwart von 0.01 g Dibutylzinndilaurat nach bekanntem Verfahren bei 80 °C zu einem Polyetherurethan-Polymer mit einem NCO-Gehalt von 6.4 Gewichts-%, einer Viskosität von 4.1 Pa·s bei 20 °C und einem Gehalt an monomerem IPDI von ca. 12 Gewichts-% umgesetzt.

Anschliessend wurden die flüchtigen Bestandteile, insbesondere der Grossteil des monomeren IPDI, in einem Kurzwegverdampfer destillativ entfernt (Manteltemperatur 160 °C, Druck 0.1 bis 0.005 mbar). Das so erhaltene Polyetherurethan-Polymer wies einen NCO-Gehalt von 1.9 Gewichts-%, eine Viskosität von 8.2 Pa·s bei 20 °C und einen Gehalt an monomerem IPDI von 0.02 Gewichts-% auf.

### Polymer P2:

725 g Desmophen^{®} 5031 BT (Glycerin-gestartetes Ethylenoxid-terminiertes Polyoxypropylen-Triol, OH-Zahl 28.0 mg KOH/g, OH-Funktionalität ca. 2.3; von Covestro) und 275 g 4,4'-Diphenylmethandiisocyanat (Desmodur^{®} 44 MC L, von Covestro) wurden nach bekanntem Verfahren bei 80 °C zu einem Polyetherurethan-Polymer mit einem NCO-Gehalt von 7.6 Gewichts-%, einer Viskosität von 6.5 Pa·s bei 20 °C und einem Gehalt an monomerem 4,4'-Diphenylmethandiisocyanat von ca. 20 Gewichts-% umgesetzt.

Anschliessend wurden die flüchtigen Bestandteile, insbesondere der Grossteil des monomeren 4,4'-Diphenylmethandiisocyanats, in einem Kurzwegverdampfer destillativ entfernt (Manteltemperatur 180 °C, Druck 0.1 bis 0.005 mbar, Kondensationstemperatur 47°C). Das so erhaltene Polyetherurethan-Polymer wies einen NCO-Gehalt von 1.7 Gewichts-%, eine Viskosität von 19 Pa·s bei 20 °C und einen Gehalt an monomerem 4,4'-Diphenylmethandiisocyanat von 0.04 Gewichts-% auf.

Polymere **P1** und **P2** sind Prepolymere (Isocyanatgruppen-haltige Polymere) mit niedrigem Gehalt an monomeren Diisocyanaten.

Die **Viskosität** wurde mit einem thermostatisierten Kegel-Platten-Viskosimeter Rheotec RC30 (Kegeldurchmesser 25 mm, Kegelwinkel 1°, Kegelspitze-Platten-Abstand 0.05 mm, Scherrate 10 s⁻¹) gemessen.

Der **Gehalt an monomerem Diisocyanat** wurde mittels HPLC (Detektion über Photodiodenarray; 0.04 M Natriumacetat / Acetonitril als mobile Phase) nach vorgäniger Derivation mittels N-Propyl-4-nitrobenzylamin bestimmt.

### Herstellung einer Verdickerpaste (Thixotropiehilfsmittel)

Die **Verdickerpaste** wurde hergestellt, indem in einem Vakuummischer 300 g Diisodecylphthalat und 48 g 4,4'-Diphenylmethandiisocyanat (Desmodur^{®} 44 MC L; von Covestro) vorgelegt, leicht aufgewärmt und anschliessend unter starkem Rühren 27 g Monobutylamin langsam zugetropft wurden. Die entstehende Paste wurde unter Vakuum und Kühlung eine Stunde weitergerührt.

### Polyurethan-Zusammensetzungen

Die in Tabelle 1 angegebenen Inhaltsstoffe wurden in den angegebenen Mengen (in Gewichtsteilen) mittels eines Planetenmischers unter Vakuum und Feuchtigkeitsausschluss zu einkomponentigen Polyurethan-Zusammensetzungen **C1** und **C2** gut vermischt und bis zur Verwendung unter Feuchtigkeitsausschluss aufbewahrt.

**Tabelle 1: Polyurethan-Zusammensetzungen.**

| **Zusammensetzung → ↓ Inhaltsstoffe** | **C1** | **C2** |
|---|---|---|
| Polymer **P1** | - | 35.0 |
| Polymer **P2** | 30.0 | - |
| Härter | | |
| - Polyamin¹ | 2.7 | - |
| - Hydrazid² | - | 1.2 |
| Kreide³ | 30.0 | 36.8 |
| Russ⁴ | 16.0 | - |
| Weichmacher⁵ | 21.3 | - |
| Thixotropiehilfsmittel⁶ | - | 25.0 |
| Rheologiehilfsmittel⁷ | - | 2.0 |
| | 100.0 | 100.0 |

| | | |
|---|---|---|
| ¹ Ancamine 2014 FG (Evonik) (Epoxy-Amin-Addukt) ² Adipinsäuredihydrazid ³ Omyacarb^{®} 5 GU (von Omya) ⁴ Monarch^{®}570 (Cabot Corp.) ⁵ Diisodecylphthalat ⁶ Verdickerpaste (hergestellt wie vorstehend beschrieben) ⁷ Cab-O-Sil TS-720 (Hydrophobe Kieselsäure; Cabot Corp.) | | |

Zusammensetzung **C1** liess sich bei Temperaturen bis 40°C über mehrere Monate problemlos lagern und bei einer Temperatur von 100°C gezielt aushärten. Zudem hat sich gezeigt, dass sich Zusammensetzung **C1** auch durch Feuchtigkeitshärtung bei RT aushärten liess, wobei das nicht umgesetzte Polyamin im ausgehärteten Produkt verblieb bzw. es trat auch bei nachträglichem Erhitzen keine ölige Flüssigkeit oder dergleichen aus dem ausgehärteten Produkt aus.

Zusammensetzung **C2** liess sich bei Raumtemperatur (RT) über mehrere Monate problemlos lagern und bei einer Temperatur von 120°C gezielt aushärten. Wie Zusammensetzung **C1** lässt sich auch Zusammensetzung **C2** durch Feuchtigkeitshärtung bei RT aushärten, ohne dass bei nachträglichem Erhitzen ölige Flüssigkeit oder dergleichen aus dem ausgehärteten Produkt austrat.

Die Dual-Cure-Eigenschaften sind bei Zusammensetzung **C2** ausgeprägter als bei Zusammensetzung **C1.** Konkret zeigt die mit Feuchtigkeit gehärtete Zusammensetzung **C1** leicht andere mechanische Eigenschaften (Zugfestigkeit, Bruchdehnung und E-Modul) als die durch Hitze gehärtete Zusammensetzung **C1.** Bei Zusammensetzung **C2** wurden dagegen unabhängig von der Art der Härtung (Feuchtigkeit/Hitze) im Wesentlichen identische mechanische Eigenschaften erhalten, was auf ein vollständiges Dual-Cure-System schliessen lässt.

Die vorstehenden Ausführungsbeispiele sind jedoch lediglich als illustrative Beispiele zu verstehen, welche im Rahmen der Erfindung beliebig abgewandelt werden können.

## Patentansprüche

1. Verwendung einer Stickstoffverbindung mit einem Schmelzpunkt von mindestens 65°C als Härter für die Hitzehärtung in einer hitzehärtbaren einkomponentigen Polyurethan-Zusammensetzung, die ein Prepolymer mit Isocyanat-Endgruppen aus mindestens einem Polyisocyanat und mindestens einem Polyol umfasst, wobei die Stickstoffverbindung ausgewählt ist aus einem Polyamin, einem Hydrazid oder Mischungen daraus, wobei das Polyamin ein Epoxid-Amin-Addukt ist.

2. Verwendung nach Anspruch 1, wobei die Stickstoffverbindung einen Schmelzpunkt von mindestens 75°C, bevorzugt mindestens 100°C, im Speziellen mindestens 110°C, besonders bevorzugt mindestens 150°C aufweist.

3. Verwendung nach wenigstens einem der Ansprüche 1 bis 2, wobei das Hydrazid ein Carbonsäurehydrazid, insbesondere ein Carbonsäuredihydrazid, bevorzugt ausgewählt aus der Gruppe bestehend aus Carbodihydrazid, Oxalsäuredihydrazid, Bernsteinsäuredihydrazid, Adipinsäuredihydrazid, Korksäuredihydrazid, Azelainsäuredihydrazid, Sebacinsäuredihydrazid, Dodecansäuredihydrazid und Isophtalsäuredihydrazid, meist bevorzugt Adipinsäuredihydrazid, ist.

4. Verwendung nach wenigstens einem der Ansprüche 1 bis 3, wobei das Polyamin über tertiäre und/oder sekundäre Aminogruppen verfügt und bevorzugt frei ist von primären Aminogruppen.

5. Verwendung nach wenigstens einem der Ansprüche 1 bis 4, wobei das Epoxid-Amin-Addukt erhältlich ist durch Umsetzen eines Bisphenoldiglycidylethers mit einem aliphatischen Polyamin, insbesondere einem Diamin, besonders bevorzugt einem Diamin mit einer primären Amingruppe und einer sekundären Amingruppe und/oder einem Diamin mit einer primären Amingruppe und einer tertiären Amingruppe.

6. Verwendung nach wenigstens einem der Ansprüche 1 bis 5, wobei die Stickstoffverbindung ein Pulver mit einem D90-Wert der Partikelgrösse, bestimmt mittels ISO 13320:2020, von 50 µm, insbesondere 20 µm, besonders bevorzugt 10 µm, aufweist.

7. Verwendung nach wenigstens einem der Ansprüche 1 bis 6, wobei die Stickstoffverbindung in der Polyurethan-Zusammensetzung in direkten Kontakt mit dem Prepolymer vorliegt.

8. Verwendung nach wenigstens einem der Ansprüche 1 bis 7, wobei die Stickstoffverbindung mit einem Anteil von 0.1 - 15, Gew.-%, bevorzugt 0.5 - 10 Gew.-%, im Besonderen 0.7 - 5 Gew.-%, bezogen auf das Gesamtgewicht hitzehärtbaren Polyurethan-Zusammensetzung verwendet wird.

9. Verwendung nach wenigstens einem der Ansprüche 1 bis 8, wobei das Polyisocyanat 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI), Isophorondiisocyanat (IPDI) ist.

10. Verwendung nach wenigstens einem der Ansprüche 1 bis 9, wobei das NCO/OH-Verhältnis bei der Umsetzung zwischen Polyisocyanat und dem Polyol im Bereich von 3/1 bis 10/1, besonders bevorzugt im Bereich von 3/1 bis 8/1, insbesondere im Bereich von 4/1 bis 7/1, liegt

11. Verwendung nach wenigstens einem der Ansprüche 1 bis 4, wobei das Prepolymer mit Isocyanat-Endgruppen aus mindestens einem Polyisocyanat und mindestens einem Polyol über einen Gehalt an monomeren Polyisocyanaten, im Speziellen monomeren Diisiocyanaten, von höchstens 0.5 Gewichts-%, bevorzugt höchstens 0.3 Gewichts-%, insbesondere höchstens 0.2 Gewichts-%, im Speziellen höchstens 0.1 Gewichts-%.

12. Verwendung nach wenigstens einem der Ansprüche 1 bis 11, wobei die hitzehärtbare Polyurethan-Zusammensetzung folgende Komponenten bezogen auf das Gesamtgewicht hitzehärtbaren Polyurethan-Zusammensetzung aufweist:
a) 0.1 - 15, Gew.-%, bevorzugt 0.5 - 10 Gew.-%, im Besonderen 0.7 - 5 Gew.-%, der Stickstoffverbindung;
b) 15 - 70 Gew.-%, bevorzugt 20 - 50 Gew.-%, im Besonderen 25 - 40 Gew.-%, des Prepolymers;
c) 0 - 70 Gew.-%, bevorzugt 10 - 60 Gew.-%, im Besonderen 40 - 50 Gew.-%, anorganische und/oder organische Füllstoffe;
d) 0 - 30 Gew.-%, bevorzugt 5 - 25 Gew.-%, im Besonderen 15 - 25 Gew.-%, Weichmacher;
e) 0 - 5 Gew.-%; bevorzugt 0.5 - 4 Gew.-%, im Besonderen 1 - 3 Gew.-%, Stabilisatoren;
f) 0 - 1 Gew.-%, bevorzugt 0.01 - 0.8 Gew.-%, im Besonderen 0.05 - 0.6 Gew.-%, Katalysatoren;
g) optional ein oder mehrere zusätzliche Additive.

13. Verwendung nach irgendeinem der Ansprüche 1 bis 12, wobei die Polyurethan-Zusammensetzung ein einkomponentiger Klebstoff und/oder Dichtstoff ist, besonders bevorzugt für den Fahrzeugbau.

14. Hitzehärtbare einkomponentige Polyurethan-Zusammensetzung, insbesondere wie sie in einem der vorangehenden Ansprüche beschreiben ist, umfassend:
a) ein Prepolymer mit Isocyanat-Endgruppen aus mindestens einem Polyisocyanat, und mindestens einem Polyol und
b) eine Stickstoffverbindung mit einem Schmelzpunkt von mindestens 65°C wobei die feste Stickstoffverbindung ausgewählt ist aus einem Polyamin, einem Hydrazid oder Mischungen daraus, wobei das Polyamin ein Epoxid-Amin-Addukt ist.

15. Verfahren zur Härtung einer Polyurethan-Zusammensetzung nach Anspruch 14, wobei die Polyurethan-Zusammensetzung durch Einwirkung von Hitze und/oder Feuchtigkeit, bevorzugt Hitze, ausgehärtet wird.

## Claims

1. Use of a nitrogen compound having a melting point of at least 65°C as curing agent for thermal curing in a heat-curable one-component polyurethane composition comprising a prepolymer having isocyanate end groups, formed from at least one polyisocyanate and at least one polyol, wherein the nitrogen compound is selected from a polyamine, a hydrazide or mixtures thereof, wherein the polyamine is an epoxy-amine adduct.

2. Use according to Claim 1, wherein the nitrogen compound has a melting point of at least 75°C, preferably at least 100°C, especially at least 110°C, more preferably at least 150°C.

3. Use according to at least one of Claims 1 to 2, wherein the hydrazide is a carbonyl hydrazide, especially a carbonyl dihydrazide, preferably selected from the group consisting of carbodihydrazide, oxalic dihydrazide, succinic dihydrazide, adipic dihydrazide, suberic dihydrazide, azelaic dihydrazide, sebacic dihydrazide, dodecaneoic dihydrazide and isophthalic dihydrazide, most preferably adipic dihydrazide.

4. Use according to at least one of Claims 1 to 3, wherein the polyamine has tertiary and/or secondary amino groups and is preferably free of primary amino groups.

5. Use according to at least one of Claims 1 to 4, wherein the epoxy-amine adduct is obtainable by reacting a bisphenol diglycidyl ether with an aliphatic polyamine, especially a diamine, more preferably a diamine having one primary amine group and one secondary amine group and/or a diamine having one primary amine group and one tertiary amine group.

6. Use according to at least one of Claims 1 to 5, wherein the nitrogen compound comprises a powder having a D90 of particle size, determined by ISO 13320:2020, of 50 µm, especially 20 µm, more preferably 10 µm.

7. Use according to at least one of Claims 1 to 6, wherein the nitrogen compound in the polyurethane composition is in direct contact with the prepolymer.

8. Use according to at least one of Claims 1 to 7, wherein the nitrogen compound is used in a proportion of 0.1-15% by weight, preferably 0.5-10% by weight, in particular 0.7-5% by weight, based on the total weight of heat-curable polyurethane composition.

9. Use according to at least one of Claims 1 to 8, wherein the polyisocyanate is diphenylmethane 4,4'-diisocyanate, optionally with fractions of diphenylmethane 2,4'- and/or 2,2'-diisocyanate (MDI), tolylene 2,4-diisocyanate or mixtures thereof with tolylene 2,6-diisocyanate (TDI), isophorone diisocyanate (IPDI) .

10. Use according to at least one of Claims 1 to 9, wherein the NCO/OH ratio in the reaction between polyisocyanate and the polyol is in the range from 3/1 to 10/1, more preferably in the range from 3/1 to 8/1, especially in the range from 4/1 to 7/1.

11. Use according to at least one of Claims 1 to 4, wherein the prepolymer having isocyanate end groups, formed from at least one polyisocyanate and at least one polyol, via a content of monomeric polyisocyanates, especially monomeric diisocyanates, of not more than 0.5% by weight, preferably not more than 0.3% by weight, in particular not more than 0.2% by weight, especially not more than 0.1% by weight.

12. Use according to at least one of Claims 1 to 11, wherein the heat-curable polyurethane composition includes the following components based on the total weight of heat-curable polyurethane composition:
a) 0.1-15% by weight, preferably 0.5-10% by weight, in particular 0.7-5% by weight, of the nitrogen compound;
b) 15-70% by weight, preferably 20-50% by weight, in particular 25-40% by weight, of the prepolymer;
c) 0-70% by weight, preferably 10-60% by weight, in particular 40-50% by weight, of inorganic and/or organic fillers;
d) 0-30% by weight, preferably 5-25% by weight, in particular 15-25% by weight, of plasticizers;
e) 0-5% by weight, preferably 0.5-4% by weight, in particular 1-3% by weight, of stabilizers;
f) 0-1% by weight, preferably 0.01-0.8% by weight, in particular 0.05-0.6% by weight, of catalysts;
g) optionally one or more additional additives.

13. Use according to any of Claims 1 to 12, wherein the polyurethane composition is a one-component adhesive and/or sealant, more preferably for motor vehicle construction.

14. Heat-curable one-component polyurethane composition, especially as described in any of the preceding claims, comprising:
a) a prepolymer having isocyanate end groups, formed from at least one polyisocyanate and at least one polyol, and
b) a nitrogen compound having a melting point of at least 65°C, wherein the solid nitrogen compound is selected from a polyamine, a hydrazide or mixtures thereof, wherein the polyamine is an epoxy-amine adduct.

15. Method of curing a polyurethane composition according to Claim 14, wherein the polyurethane composition is cured by the action of heat and/or moisture, preferably heat.

## Revendications

1. Utilisation d'un composé azoté présentant un point de fusion d'au moins 65°C en tant que durcisseur pour le durcissement à la chaleur dans une composition de polyuréthane à un composant, durcissable à la chaleur, qui comprend un prépolymère présentant des groupes terminaux isocyanate constitué par au moins un polyisocyanate et au moins un polyol, le composé azoté étant choisi parmi une polyamine, un hydrazide ou leurs mélanges, la polyamine étant un produit d'addition d'époxyde-amine.

2. Utilisation selon la revendication 1, le composé azoté présentant un point de fusion d'au moins 75°C, de préférence d'au moins 100°C, spécifiquement d'au moins 110°C, de manière particulièrement préférée d'au moins 150°C.

3. Utilisation selon au moins l'une des revendications 1 à 2, l'hydrazide étant un hydrazide d'acide carboxylique, en particulier un dihydrazide d'acide carboxylique, de préférence choisi dans le groupe constitué par le carbodihydrazide, le dihydrazide de l'acide oxalique, le dihydrazide de l'acide succinique, le dihydrazide de l'acide adipique, le dihydrazide de l'acide subérique, le dihydrazide de l'acide azélaïque, le dihydrazide de l'acide sébacique, le dihydrazide de l'acide dodécanoïque et le dihydrazide de l'acide isophtalique, le plus préférablement le dihydrazide de l'acide adipique.

4. Utilisation selon au moins l'une des revendications 1 à 3, la polyamine disposant de groupes amino tertiaire et/ou secondaire et étant de préférence exempte de groupes amino primaire.

5. Utilisation selon au moins l'une des revendications 1 à 4, le produit d'addition d'époxyde-amine pouvant être obtenu par transformation d'un bisphénoldiglycidyléther avec une polyamine aliphatique, en particulier une diamine, de manière particulièrement préférée une diamine présentant un groupe amine primaire et un groupe amine secondaire et/ou une diamine présentant un groupe amine primaire et un groupe amine tertiaire.

6. Utilisation selon au moins l'une des revendications 1 à 5, le composé azoté présentant une poudre présentant une valeur D90 de la grosseur de particule, déterminée au moyen de la norme ISO 13320:2020, de 50 µm, en particulier de 20 µm, de manière particulièrement préférée de 10 µm.

7. Utilisation selon au moins l'une des revendications 1 à 6, le composé azoté se trouvant en contact direct avec le prépolymère dans la composition de polyuréthane.

8. Utilisation selon au moins l'une des revendications 1 à 7, le composé azoté étant utilisé en une proportion de 0,1 - 15% en poids, de préférence de 0,5 - 10% en poids, en particulier de 0,7 - 5% en poids, par rapport au poids total de la composition de polyuréthane durcissable à la chaleur.

9. Utilisation selon au moins l'une des revendications 1 à 8, le polyisocyanate étant le diisocyanate de 4,4'-diphénylméthane, le cas échéant présentant des proportions de diisocyanate de 2,4'-diphénylméthane et/ou de 2,2'-diphénylméthane (MDI), le diisocyanate de 2,4-toluylène ou des mélanges de celui-ci avec le diisocyanate de 2,6-toluylène (TDI), le diisocyanate d'isophorone (IPDI).

10. Utilisation selon au moins l'une des revendications 1 à 9, le rapport NCO/OH lors de la transformation entre le polyisocyanate et le polyol étant situé dans la plage de 3/1 à 10/1, de manière particulièrement préférée dans la plage de 3/1 à 8/1, en particulier dans la plage de 4/1 à 7/1.

11. Utilisation selon au moins l'une des revendications 1 à 4, le prépolymère présentant des groupes terminaux isocyanate étant constitué par au moins un polyisocyanate et au moins un polyol par le biais d'une teneur en polyisocyanates monomères, en particulier en diisocyanates monomères, d'au plus 0,5% en poids, de préférence d'au plus 0,3% en poids, en particulier d'au plus 0,2% en poids, spécifiquement d'au plus 0,1% en poids.

12. Utilisation selon au moins l'une des revendications 1 à 11, la composition de polyuréthane durcissable à la chaleur présentant les composants suivants par rapport au poids total de la composition de polyuréthane durcissable à la chaleur :
a) 0,1 - 15% en poids, de préférence 0,5 - 10% en poids, en particulier 0,7 - 5% en poids du composé azoté ;
b) 15 - 70% en poids, de préférence 20 - 50% en poids, en particulier 25 - 40% en poids du prépolymère ;
c) 0 - 70% en poids, de préférence 10 - 60% en poids, en particulier 40 - 50% en poids, de charges inorganiques et/ou organiques ;
d) 0 - 30% en poids, de préférence 5 - 25% en poids, en particulier 15 - 25% en poids de plastifiants ;
e) 0 - 5% en poids, de préférence 0,5 - 4% en poids, en particulier 1 - 3% en poids de stabilisants ;
f) 0 - 1% en poids, de préférence 0,01 - 0,8% en poids, en particulier 0,05 - 0,6% en poids de catalyseurs ;
g) éventuellement un ou plusieurs additifs supplémentaires.

13. Utilisation selon l'une quelconque des revendications 1 à 12, la composition de polyuréthane étant un adhésif et/ou un matériau d'étanchéité à un composant, de manière particulièrement préférée pour la construction de véhicules.

14. Composition de polyuréthane à un composant, durcissable à la chaleur, en particulier telle que décrite dans l'une des revendications précédentes, comprenant :
a) un prépolymère présentant des groupes terminaux isocyanate constitué par au moins un polyisocyanate et au moins un polyol et
b) un composé azoté présentant une point de fusion d'au moins 65°C, le composé azoté solide étant choisi parmi une polyamine, un hydrazide ou des mélanges de ceux-ci, la polyamine étant un produit d'addition d'époxyde-amine.

15. Procédé pour le durcissement d'une composition de polyuréthane selon la revendication 14, la composition de polyuréthane étant durcie sous l'effet de la chaleur et/ou de l'humidité, de préférence de la chaleur.
